# EUROPEAN PATENT SPECIFICATION

(11) **EP 0 532 116 B1**
(45) Date of publication and mention of the grant of the patent: **02.06.1999**
(21) Application number: 92202739.6
(22) Date of filing: 09.09.1992
(51) Int. Cl.: C10G 47/14, C10G 69/02

(54) **Process for the preparation of hydrocarbon fuels**
Verfahren zur Herstellung von Kohlenwasserstoffbrennstoffen
Procédé de préparation de combustibles hydrocarburés

(30) Priority: 12.09.1991 GB 9119495
(43) Date of publication of application: 17.03.1993
(73) Proprietor: SHELL INTERNATIONALE RESEARCH MAATSCHAPPIJ B.V., 2596 HR Den Haag (NL)
(72) Inventor: Van Ballegoy, Carolus Maria, NL-1031 CM Amsterdam (NL); Meuris, Theofiel, NL-1031 CM Amsterdam (NL); Nanne, Johannes Martinus, NL-1031 CM Amsterdam (NL); Gilson, Jean-Pierre, NL-1031 CM Amsterdam (NL)

(56) References cited:
- EP-A- 0 488 514
- CA-A- 1 234 396
- US-A- 3 169 107

## Description

The present invention relates to a process for the preparation of hydrocarbon fuels, in particular naphtha and middle distillates, from a hydrocarbon feed, which feed comprises a fraction having a boiling point above the boiling point range of the hydrocarbon fuels and which is the product of a Fischer-Tropsch synthesis.

The preparation of hydrocarbons from a gaseous mixture comprising carbon monoxide and hydrogen by contacting the mixture with a suitable catalyst at elevated temperatures and pressures is a well known process, referred to in the art as the Fischer-Tropsch process.

Recently, much attention has been paid to processes for the preparation of middle distillate fuels, which processes comprise two stages; a first stage in which high boiling range hydrocarbons are prepared from a mixture of carbon monoxide and hydrogen by means of the Fischer-Tropsch process, and a second stage in which the hydrocarbons so-produced are subjected to a hydroconversion process yielding the desired middle distillates. Naphtha may be prepared from the high boiling range product of a Fischer-Tropsch synthesis in a similar manner.

For the purposes of this specification, the term "middle distillates" as used herein is to be taken as a reference to hydrocarbons or hydrocarbon mixtures having a boiling point or boiling point range substantially corresponding to that of the kerosine and gasoil fractions obtained during the conventional atmospheric distillation of crude oil. The term "naphtha" as used herein is a reference to hydrocarbons or hydrocarbon mixtures having a boiling point or boiling point range substantially corresponding to that of the naphtha (sometimes referred to a gasoline) fractions obtained during the conventional atmospheric distillation of crude oil. In a typical distillation, the following fractions are consecutively recovered from the crude oil: one or more naphtha fractions boiling in the range of from 30 to 220 °C, one or more kerosine fractions boiling in the range of from 140 to 300 °C and one or more gasoil fractions boiling in the range of from 180 to 370 °C. The term "hydrocarbon fuels" is to be taken as a reference to either one of or a mixture of naphtha and middle distillates.

Thus, UK patent application publication No. 2 077 289 (GB-A-2 077 289) and European patent applications publication numbers 0 127 220 and 0 147 873 (EP-A-0 127 220 and EP-A-0 147 873) each disclose a process for the preparation of middle distillates in which a mixture of carbon monoxide and hydrogen is converted in a first stage into high boiling range hydrocarbons by means of the Fischer-Tropsch process, which hydrocarbons are then subjected to a catalytic hydroconversion. The specifications of the aforementioned patent applications disclose a range of possible catalyst compositions for use in the hydroconversion stage of the process, with preference being given in each case to catalysts comprising a Group VIII metal as catalytically active component on a suitable carrier. Particular preference is given to catalysts comprising platinum. Suitable carriers are stated in GB-A-2 077 289 to be amorphous oxides of the elements in Groups II, III and IV of the Periodic Table of Elements, such as silica, alumina, magnesia, zirconia, as well as mixtures thereof, including silica-alumina, silica-magnesia and silica-zirconia, and zeolitic materials such as mordenite and faujasite. Alumina and silica-alumina are said to be preferred carrier materials.

The specifications of all of GB-A-2 077 289, EP-A-0 127 220 and EP-A-0 147 873 specifically exemplify the use of a platinum/silica-alumina catalyst comprising 0.82 parts by weight of platinum per 100 parts by weight of carrier, which carrier consists of 14.6% by weight of alumina and 85.4% by weight of silica, in the hydroconversion stage of the middle distillate preparation.

In processes in which it is desired to produce hydrocarbon fuels in high yields from the high boiling range products of the Fischer-Tropsch synthesis there is a need for a hydroconversion catalyst which exhibits a high level of intrinsic hydroconversion activity.

Platinum/silica-alumina catalysts and processes for their preparation are known in the art for application in the hydroconversion of various hydrocarbon products. Canadian patent specification No. 1 234 396 discloses hydrocracking of hydrocarbon products of a Fischer-Tropsch synthesis to prepare middle distillates and naphtha, using a catalyst comprising platinum or palladium on a silica-alumina carrier. Known methods for preparing such catalysts include impregnating a suitable carrier material with a platinum salt in the presence of a liquid. Typically, the platinum salt will be selected so as to be soluble in the liquid, conveniently water. Any suitable platinum salt may be used.

For example, UK patent No. 1 451 617 (GB 1 451 617) discloses a process for the preparation of medicinal oils in which a hydrocarbon mixture having a low aromatic content is contacted at elevated temperature and pressure with a catalyst comprising one or more noble metals from Group VIII on a carrier which contains 13 to 15% by weight of alumina, the remainder being silica. Catalysts specifically exemplified in GB 1 451 617 comprise nickel, molybdenum, tungsten and/or platinum as catalytically active metals supported on a silica-alumina carrier. Specific platinum-based catalysts comprise platinum supported on silica-alumina carriers having surface areas ranging from 110 to 518 m²/g and pore volumes ranging from 0.34 to 0.87 ml/g. In GB 1 451 617, it is described that the catalysts may be prepared by impregnating the silica-alumina carrier with an aqueous solution containing one or more noble metal compounds, followed by drying and calcining the resulting catalyst. The specific platinum-containing catalysts exemplified in GB 1 451 617 were prepared by impregnating the carrier material with an aqueous solution of chloroplatinic acid.

United States patent specification No. 3 684 742 discloses a process for the preparation of liquefied petroleum gas (LPG) from middle distillates, using a catalyst comprising a platinum group metallic component on a silica-alumina carrier material.

It has now been found that the platinum/silica-alumina catalysts described and exemplified in GB 1 451 617 are active in the preparation of hydrocarbon fuels from higher boiling range hydrocarbons produced by the Fischer-Tropsch synthesis. However, most surprisingly, it has been found that the method by which the silica-alumina carrier material is impregnated with the platinum metal has a major impact on the level of activity of the catalyst. In particular, it has now been found that impregnation of the silica-alumina at a pH below 1.0 is essential in order to obtain a catalyst exhibiting a high degree of activity in the preparation of either middle distillates and/or naphtha from the high boiling products of a Fischer-Tropsch synthesis.

Accordingly, the present invention provides a process for preparing hydrocarbon fuels from a hydrocarbon feed obtained by a Fischer-Tropsch synthesis and comprising a fraction having a boiling point above the boiling point range of the hydrocarbon fuels, which process comprises contacting the said hydrocarbon feed at elevated temperature and pressure in the presence of hydrogen with a catalyst comprising a silica-alumina carrier impregnated with platinum by a process comprising contacting the silica-alumina with a platinum salt in the presence of a liquid having a pH below 1.0.

The carrier for the catalyst employed in the process of the present invention is prepared from an amorphous silica-alumina starting material. The term "amorphous" indicates a lack of crystal structure, as defined by X-ray diffraction, in the carrier material, although some short range ordering may be present. Amorphous silica-alumina suitable for use in preparing the catalyst is available commercially. Alternatively, the silica-alumina may be prepared by precipitating alumina or a silica hydrogel and subsequently drying and calcining the resulting material, as described in GB 1 451 617.

The catalyst may comprise any suitable silica-alumina. The silica-alumina preferably contains alumina in an amount in the range of from 5 to 30% by weight, more preferably from 10 to 20% by weight, especially from 12 to 15% by weight.

The silica-alumina may have any suitable pore volume. However, it has been found that the pore volume of the amorphous silica-alumina starting material used in the preparation of the catalyst carrier affects the selectivity of the catalyst in the process of the present invention. Thus, if middle distillates are required in higher yields, the pore volume of the amorphous silica-alumina is preferably at least 1.0 ml/g, more preferably in the range of from 1.0 to 2.0 ml/g, especially from 1.0 to 1.5 ml/g. In contrast, if naphtha is required in higher yields, the pore volume of the amorphous silica-alumina is preferably below 1.0 ml/g, more preferably in the range of from 0.5 to 1.0 ml/g, still more preferably from 0.5 to 0.9 ml/g, especially from 0.65 to 0.85 ml/g.

For the purposes of this specification, all pore volumes quoted in relation to the catalyst for use in the process of the present invention are references to pore volumes measured by a method involving the uptake of water into the pores of the material, often referred to as the incipient wetness method, and are generally indicated as pore volume (H₂O).

A typical procedure for determining the pore volume (H₂O) of a catalyst or carrier material comprises drying the material at a temperature of about 500°C; weighing the dried material; immersing the material in water for a period of about 15 minutes; removing the material from the water; removing the water on the surface of the material by means of a centrifuge; and weighing the resulting material. The pore volume of the material is determined from the difference between the weight of the dried material and the weight of the resulting material.

In addition to silica-alumina, the carrier may also comprise one or more binder materials. Suitable binder materials include inorganic oxides. Both amorphous and crystalline binders may be applied. Examples of binder materials comprise silica, alumina, clays, magnesia, titania, zirconia and mixtures thereof. Silica and alumina are preferred binders, with alumina being especially preferred. The binder, if incorporated in the catalyst, is preferably present in an amount of from 5 to 50% by weight, more preferably from 15 to 30% by weight, on the basis of total weight of the carrier.

The carrier may be prepared from the amorphous silica-alumina by methods known to the person skilled in the art. A preferred method for the preparation of the carrier comprises mulling a mixture of the amorphous silica-alumina and a suitable liquid, extruding the mixture and drying the resulting extrudates.

The mixture to be extruded should, preferably, have a solids content in the range of from 20 to 60% by weight.

The liquid for inclusion in the mixture may be any of the suitable liquids known in the art. Examples of suitable liquids include water; alcohols, such as methanol, ethanol and propanol; ketones, such as acetone; aldehydes, such as proponal, and aromatic liquids, such as toluene. A most convenient and preferred liquid is water.

To obtain strong extrudates, the mixture preferably includes a peptizing agent. Suitable peptizing agents are acidic compounds, for example inorganic acids such as aqueous solutions of hydrogen fluoride, hydrogen bromide and hydrogen chloride, nitric acid, nitrous acid and perchloric acid. Preferably, the peptizing agent is an organic acid, for example a mono- or dicarboxylic acid. Preferred organic acids include acetic acid, propionic acid and butanoic acid. Acetic acid is a most preferred peptizing agent.

The amount of peptizing agent included in the mixture should be sufficient to fully peptize the alumina present in the carrier material, and can be readily determined by the pH of the mixture. During mulling, the pH of the mixture should preferably lie in the range of from 1 to 6, more preferably from 4 to 6.

To improve the flow properties of the mixture, it is preferred to include one or more flow improving agents and/or extrusion aids in the mixture prior to extrusion. Suitable additives for inclusion in the mixture include fatty amines, quaternary ammonium compounds, aliphatic mono-carboxylic acids, ethoxylated alkyl amines, polyvinyl pyridine, and sulphoxonium, sulphonium, phosphonium and iodonium compounds, alkylated aromatic compounds, acyclic mono-carboxylic acids, fatty acids, sulphonated aromatic compounds, alcohol sulphates, ether alcohol sulphates, sulphated fats and oils, phosphonic acid salts, polyoxyethylene alkylphenols, polyoxyethylene alcohols, polyoxyethylene alkylamines, polyoxyethylene alkylamides, polyacrylamides, polyols and acetylenic glycols. Preferred agents are sold under the trademarks Nalco and Superfloc.

The flow improving agents/extrusion aids are preferably present in the mixture in a total amount in the range of from 1 to 20% by weight, more preferably from 2 to 10% by weight, on the basis of the total weight of the mixture.

In principle, the components of the mixture may be combined in any order, and the mixture mulled. Preferably, the amorphous silica-alumina and the binder, if present, are combined and the mixture mulled. Thereafter, the liquid and, if present, the peptizing agent are added and the resulting mixture further mulled. Finally, any flow improving agents/extrusion aids to be included are added and the resulting mixture mulled for a final period of time.

Typically, the mixture is mulled for a period of from 10 to 120 minutes, preferably from 15 to 90 minutes. During the mulling process, energy is input into the mixture by the mulling apparatus. The rate of energy input into the mixture is typically from 0.05 to 50 Wh/min/kg, preferably from 0.5 to 10 Wh/min/kg. The mulling process may be carried out over a broad range of temperatures, preferably from 15 to 50 °C. As a result of the energy input into the mixture during the mulling process, there will be a rise in the temperature of the mixture during the mulling. The mulling process is conveniently carried out at ambient pressure. Any suitable, commercially available mulling apparatus may be employed.

Once the mulling process has been completed, the resulting mixture is then extruded. Extrusion may be effected using any conventional, commercially available extruder. In particular, a screw-type extruding machine may be used to force the mixture through orifices in a suitable dieplate to yield extrudates of the desired form. The strands formed upon extrusion may be cut to the desired length.

The extrudates may have any suitable form known in the art, for example cylindrical, hollow cylindrical, multilobed or twisted multilobed. A most convenient shape for the catalyst particles of the present invention is cylindrical. Typically, the extrudates have a nominal diameter of from 0.5 to 5 mm, preferably from 1 to 3 mm.

After extrusion, the extrudates are dried. Drying may be effected at an elevated temperature, preferably up to 800 °C, more preferably up to 300 °C. The period for drying is typically up to 5 hours, preferably from 30 minutes to 3 hours.

Preferably, the extrudates are calcined after drying. Calcination is effected at an elevated temperature, preferably up to 1000 °C, more preferably from 200 °C to 1000 °C, most preferably from 300° to 800 °C. Calcination of the extrudates is typically effected for a period of up to 5 hours, preferably from 30 minutes to 4 hours.

The catalyst used in the process of the present invention comprises platinum as a catalytically active component. Platinum is preferably present in an amount in the range of from 0.05 to 5.0% by weight, more preferably from 0.1 to 2.0% by weight, especially from 0.2 to 1.0% by weight, on the basis of total weight of carrier material in the catalyst.

The platinum is deposited onto the carrier by means of impregnation, in which the carrier is contacted with a platinum salt in the presence of a liquid. In order to achieve the high levels of activity in the process of the present invention, it is essential that the impregnation of the silica-alumina carrier is conducted at a pH below 1.0.

Most conveniently, the platinum salt and liquid are selected so that the salt is soluble in the liquid and the carrier is contacted with a platinum salt solution. Suitable liquids for use in the impregnation are both organic liquids, for example alcohols and ethers, and inorganic liquids, for example water. Water is a most convenient and especially preferred liquid.

Any suitable platinum salt may be used, with preference being given to salts soluble in the selected liquid. Suitable salts include both organic and inorganic salts. Examples of suitable salts are platinum dibromide, platinum dichloride, platinum trichloride, platinum tetrachloride, platinum dichlorocarbonyldichloride, platinum tetrafluoride and platinum sulphate.

A preferred catalyst is one prepared by an impregnation using a solution of an acidic platinum salt, the platinum salt providing both a source for the platinum and giving rise to the required conditions of acidity. Preferred acid salts for such functions are hexachloroplatinic acid, tetracyanoplatinic acid, hexahydroxyplatinic acid, platinum monohydroxychloric acid and platinum (III) sulphuric acid. Hexachloroplatinic acid is an especially preferred acid platinum salt.

If an acid platinum salt is not used in the impregnation of the carrier, the impregnation is effected in the presence of an additional acid. More preferably, both an acid platinum salt and an additional acid are present during the impregnation of the carrier. Suitable acids for use during the impregnation include both organic and inorganic acids, for example mono- and dicarboxylic acids, hydrochloric acid, sulphuric acid and nitric acid. Nitric acid is a particularly preferred acid. An especially preferred catalyst is one prepared by impregnation of the carrier using a combination of hexachloroplatinic acid and nitric acid.

If the catalyst is prepared by means of impregnation in the presence of both an acidic platinum salt and an additional acid, the additional acid is preferably present in an amount in excess of the amount of acid platinum salt, the molar ratio of additional acid to acid platinum salt preferably being in the range of from 2 to 20, more preferably from 5 to 15.

A preferred impregnation technique for preparing the catalyst for use in the process of the present invention is the pore volume impregnation technique, in which the carrier is contacted with a solution of the platinum salt, the solution being present in a sufficient volume so as to substantially just fill the pores of the carrier material. A convenient method for effecting the impregnation is by spraying the carrier with the requisite quantity of the solution.

After impregnation, the resulting catalyst is preferably dried and, thereafter, preferably calcined. The conditions for drying and calcining are as set out hereinbefore.

In the process of the present invention, hydrocarbons comprising at least a fraction having a boiling point above the boiling point range of the hydrocarbon fuels and prepared by a Fischer-Tropsch synthesis process are contacted with a catalyst as hereinbefore described at elevated temperature and pressure in the presence of hydrogen. The major reaction occurring during the process is a hydrocracking of the heavier components in the feed to yield the desired hydrocarbon fuels. In addition, some hydroisomerization of the hydrocarbons in the feed may occur.

Typically, the temperature necessary to yield the hydrocarbon fuels will lie in the range of from 175 to 400°C, preferably from 250 to 375°C. Typical hydrogen partial pressures range from 1 to 25 MPa (10 to 250 bars) and are preferably in the range of from 2.5 to 15 MPa (25 to 150 bars). Hydrogen may be supplied at a gas hourly space velocity of from 100 to 10000 Nl/l/hr, preferably from 500 to 5000 Nl/l/hr. The hydrocarbon feed may be provided at a space velocity in the range of from 0.1 to 5 kg/l/hr, preferably from 0.25 to 2 kg/l/hr. The ratio of hydrogen to hydrocarbon feed may range from 100 to 5000 Nl/kg and is preferably from 250 to 2500 Nl/kg.

The hydrocarbon feed for the process of the present invention is prepared by the Fischer-Tropsch synthesis, in which a mixture comprising carbon monoxide and hydrogen is contacted with a Fischer-Tropsch catalyst at elevated temperature and pressure.

The catalyst employed in the Fischer-Tropsch synthesis may be any of the catalysts active in such synthesis, which catalysts are well known in the art. Typically, the catalyst comprises, as catalytically active component, one or more metals selected from Group VIIB or Group VIII of the Periodic Table of Elements. Preference is given to catalysts comprising elements from Group VIII. In particular, catalysts comprising one or more metals from the iron group of elements, that is iron, cobalt and nickel, are especially preferred. Especially suitable are catalysts comprising cobalt as a catalytically active component.

The catalytically active components may be present in the Fischer-Tropsch catalyst together with one or more promoters or co-catalysts. The promoters may be present either as metals or metal oxides. Suitable metal oxide promoters include oxides of metals from Groups IIA, IIIB, IVB, VB, or VIB of the Periodic Table, from the lanthanides and/or actinides. Preferably, the catalyst comprises a source of an element in Group IVB of the Periodic Table, in particular titanium or zirconium. Catalysts containing zirconium are especially preferred. As an alternative to or in addition to the metal oxide promoter, the catalyst may comprise a metal promoter selected from Groups VIIB and/or VIII of the Periodic Table. Preferred metal promoters include platinum and palladium. A most suitable Fischer-Tropsch catalyst comprises cobalt as the catalytically active component and zirconium as a promoter.

The catalyst employed in the Fischer-Tropsch synthesis typically also comprises a refractory oxide carrier, on which the catalytically active components and promoters, if present, are supported. The carrier may comprise any suitable refractory oxide, for example alumina, silica, titania, zirconia or mixtures thereof. Silica and/or alumina are preferred carrier materials.

The Fischer-Tropsch catalyst typically comprises the catalytically active component in an amount in the range of from 1 to 100 parts by weight, preferably 10 to 50 parts by weight, per 100 parts by weight of carrier material. The promoter, if present, is typically present in an amount of from 1 to 60 parts by weight, preferably from 2 to 40 parts by weight, per 100 parts by weight of carrier material.

The catalysts employed in the Fischer-Tropsch synthesis of the hydrocarbon feed for the process of the present invention may be prepared by methods known in the art.

During the Fischer-Tropsch synthesis, a mixture of carbon monoxide and hydrogen is contacted with the Fischer-Tropsch catalyst at elevated temperature and pressure. Typically the reaction is effected at a temperature in the range of from 125 to 350°C, preferably from 175 to 250°C. The reaction pressure is typically in the range of from 0.5 to 10 MPa (5 to 100 bar), preferably from 1.2 to 5 MPa (12 to 50 bar). The hydrogen/carbon monoxide ratio of the feed mixture is typically greater than 1.5, preferably between 1.75 and 2.25. Unconverted hydrogen and carbon monoxide may be separated from the reaction product and recycled to the reactor inlet. In such an arrangement, the hydrogen/carbon monoxide ratio of the mixture contacting the catalyst may be significantly lower than that of the feed mixture, for example in the range of from 0.9 to 1.3, preferably about 1.1.

In a preferred embodiment of the process of the present invention, the hydrocarbon feed is the product of a Fischer-Tropsch synthesis in which a cobalt-containing catalyst has been employed. It is known in the art that cobalt is active in the Fischer-Tropsch synthesis in the preparation of hydrocarbon products comprising substantial quantities of paraffinic hydrocarbons. The process of the present invention has been found to be particularly advantageous in the preparation of naphtha and/or middle distillates from such paraffinic feeds.

The hydrocarbon feed to the process of the present invention comprises at least a fraction boiling above the boiling point range of the middle distillates and/or the naphtha product. If desired, the product of the Fischer-Tropsch synthesis may be separated into fractions, for example by conventional distillation techniques, and those fractions having a boiling point above the boiling point range of the desired product used as the hydrocarbon feed to the present process. In this case, substantially all of the hydrocarbon feed will have a boiling point greater than that of the products of the process. Alternatively, the hydrocarbon feed may comprise both fractions boiling above and below the upper boiling point of the boiling point range of the middle distillates and/or naphtha produced.

The process of the present invention may be used to prepare a hydrocarbon fuels product comprising substantially equal amounts of middle distillates and naphtha. Alternatively, the process may be operated to selectively produce one of naphtha or the middle distillates in substantially higher yields. If naphtha is the desired product, it may be prepared from a hydrocarbon feed boiling above the boiling point range of naphtha, but within the boiling point range of the middle distillates.

The present invention is further described in the following illustrative examples.

### EXAMPLE 1

### a) Catalyst Preparation

A mixture comprising amorphous silica-alumina (ex Grace Davison, pore volume (H₂O) 1.10 ml/g, 13% wt alumina (dry basis); 1834.9g) and alumina (ex Criterion Catalyst Co.; 554.8g) was placed in a mulling machine and mulled for a period of 10 minutes. Acetic acid (10% wt aqueous solution; 200.0g) and water (2190.3g) were added and the resulting mixture mulled for a further 10 minutes. Thereafter, polyacrylamide (Superfloc A1839, 2% wt aqueous solution; 40.0g) was added and mulling continued for a further 10 minutes. Finally, polyelectrolyte (Nalco, 4% wt aqueous solution; 80.0g) was added and the mixture mulled for a final period of 5 minutes.

The resulting mixture was extruded using a 5.72 cm (2.25") Bonnot extruder through a cylindrical dieplate, yielding 1.7mm diameter cylindrical extrudates. The resulting extrudates were dried at a temperature of 120 °C for 2 hours and subsequently calcined at a temperature of 600 °C for 2 hours.

An aqueous solution was prepared comprising hexachloroplatinic acid (H₂PtCl₆, 2.45% wt) and nitric acid (7.66% wt) having a pH of below 1. The cylindrical carrier particles were impregnated using this aqueous solution via the Pore Impregnation technique to give a final platinum loading on the carrier of 0.8% wt. The thus impregnated carrier particles were then calcined at a temperature of 500 °C for a period of 1 hour to yield the final catalyst.

### b) Fischer-Tropsch synthesis

A wax was prepared using the Fischer-Tropsch synthesis by the following method:

A catalyst comprising cobalt (18.3% wt, present as cobalt oxide), zirconium (8.5% wt, present as zirconium oxide) and silica was loaded into a fixed bed reactor. The catalyst was contacted with a mixture of carbon monoxide and hydrogen having a hydrogen to carbon monoxide molar ratio of 1.1, fed at a gas hourly space velocity of from 1120 to 1130 Nl/l/h at a pressure of 3.6 MPa (36 bars) and a temperature of from 210 to 225 °C. A heavy wax was produced, from which a fraction having a boiling point range of 370+ °C was separated.

### c) Middle Distillate and Naphtha Preparation

The catalyst prepared in 1(a) above was used to prepare middle distillates and naphtha by the hydroconversion of the 370+ °C fraction of the heavy wax produced in the Fischer-Tropsch synthesis process of (b) above. The test procedure used was as follows:

A sample of the catalyst prepared in 1(a) above was loaded into a fixed bed reactor. The catalyst was contacted with the 370+ °C fraction of heavy wax and hydrogen at a hydrogen gas hourly space velocity of 1000 Nl/l/hr, a wax hourly weight space velocity of 1.25 kg/l/hr and at a pressure of 3 MPa (30 bars). The temperature was adjusted to 340 °C in order to achieve a wax conversion of 60% wt. The fraction of the reactor effluent having a boiling point range of from 220 to 370 °C was separated as representative of a middle distillate product and the fraction having a boiling point range below 220°C was separated as representative of a naphtha product. At a conversion of 60% wt, the catalyst exhibited a selectivity to middle distillates of 50% wt and a selectivity to naphtha of 50% wt.

### EXAMPLE 2

### a) Catalyst Preparation

A catalyst was prepared as follows:

A commercially available carrier material comprising 3.0mm diameter cylindrical extrudates prepared from an amorphous silica-alumina starting material having a pore volume (H₂O) of 1.10 ml/g was obtained (ex Criterion Catalyst Co.).

An aqueous solution was prepared comprising hexachloroplatinic acid (H₂PtCl₆, 2.45% wt) and nitric acid (7.66% wt) having a pH of below 1. The cylindrical carrier particles were impregnated using this aqueous solution via the Pore Impregnation technique to give a final platinum loading on the carrier of 0.8% wt. The thus impregnated carrier particles were then calcined at a temperature of 500 °C for a period of 1 hour to yield the final catalyst.

### b) Fischer-Tropsch synthesis

A wax was prepared using the Fischer-Tropsch synthesis by the method as described in Example 1(b) above.

### c) Middle Distillate Preparation

The catalyst prepared in 2(a) above was used to prepare middle distillates by the hydroconversion of the 370+ °C fraction of the heavy wax produced in the Fischer-Tropsch synthesis process of 2(b) above. The test procedure used was as follows:

A sample of the catalyst prepared in 2(a) above was loaded into a fixed bed reactor. The catalyst was contacted with the 370+ °C fraction of heavy wax and hydrogen at a hydrogen gas hourly space velocity of 1000Nl/l/hr, at a wax hourly weight space velocity of 1.25 kg/l/hr and at a pressure of 3 MPa (30 bars). The temperature was adjusted to 335 °C in order to achieve a wax conversion of 60% wt. As representative of a middle distillate product, the fraction of the reactor effluent having a boiling point range of from 220 to 370 °C was separated. The fraction boiling below 220°C was also separated from the reactor effluent as representative of a naphtha product. At a conversion of 60% wt, the catalyst exhibited a selectivity to middle distillates of 52% wt and a selectivity to naphtha of 48% wt.

### COMPARATIVE EXAMPLE

### a) Catalyst Preparation

A catalyst was prepared by the following method:

A carrier was prepared using the method described in Example 2(a) above. An aqueous solution was prepared comprising tetramine platinum hydroxide ((NH₃)₄Pt(OH)₂) having a pH of above 7. The cylindrical carrier particles were impregnated using this aqueous solution via the Pore Impregnation technique to give a final platinum loading on the carrier of 0.8% wt. The thus impregnated carrier particles were then calcined at a temperature of 500 °C for a period of 1 hour to yield the final catalyst.

### b) Middle Distillate and Naphtha Preparation

The catalyst prepared in (a) above was used to prepare middle distillates by the hydroconversion of a portion of the 370+ °C fraction of the heavy wax produced in the Fischer-Tropsch synthesis process of Example 2(b) above. The test procedure was as described in Example 2(c) above.

A temperature of 344 °C was required to obtain a wax conversion of 60% wt. The fraction of the reactor effluent having a boiling point range of from 220 to 370 °C was separated as representative of a middle distillate product and the fraction having a boiling point range below 220°C was separated as representative of a naphtha product. At a conversion of 60% wt, the catalyst prepared in (a) above exhibited a selectivity to middle distillates of 25% wt.

## Claims

1. A process for preparing hydrocarbon fuels from a hydrocarbon feed obtained by a Fischer-Tropsch synthesis and comprising a fraction having a boiling point above the boiling point range of the hydrocarbon fuels, which process comprises contacting the said hydrocarbon feed at elevated temperature and pressure in the presence of hydrogen with a catalyst comprising a silica-alumina carrier impregnated with platinum by a process comprising contacting the carrier with a platinum salt in the presence of a liquid having a pH below 1.0.

2. A process according to claim 1, characterised in that the carrier has been contacted with the platinum salt in the presence of an acid selected from monocarboxylic acids, dicarboxylic acids, hydrochloric acid, sulphuric acid and nitric acid, preferably nitric acid.

3. A process according to claim 1 or 2, characterised in that the platinum salt is an acid platinum salt, preferably an acid platinum salt selected from hexachloroplatinic acid, tetracyanoplatinic acid, hexahydroxyplatinic acid, platinum monohydroxychloric acid and platinum (III) sulphuric acid, most preferably hexachloroplatinic acid.

4. A process according to any preceding claim, characterised in that the amorphous silica-alumina comprises alumina in an amount in the range of from 5 to 30% by weight, preferably 10 to 20% by weight, more preferably 12 to 15% by weight.

5. A process according to any preceding claim, characterised in that the pore volume of the amorphous silica-alumina is in the range of from 1.0 to 2.0 ml/g, preferably from 1.0 to 1.5 ml/g.

6. A process according to any one of claims 1 to 4, characterised in that the pore volume of the amorphous silica alumina is below 1.0 ml/g, preferably in the range of from 0.5 to 0.9 ml/g, more preferably from 0.5 to 0.9 ml/g.

7. A process according to any preceding claim, characterised in that the carrier comprises a binder, preferably selected from silica, alumina, clays, titania, zirconia and mixtures thereof, most preferably alumina.

8. A process according to claim 7, characterised in that the catalyst comprises the binder in an amount in the range of from 10 to 50% by weight, preferably from 15 to 30% by weight, on the basis of total weight of the carrier.

9. A process according to any preceding claim, characterised in that the catalyst comprises platinum in an amount in the range of from 0.05 to 5% by weight, preferably 0.1 to 2.0% by weight, more preferably from 0.2 to 1.0% by weight, on the basis of total weight of the carrier.

10. A process according to any preceding claim, characterised in that the hydrocarbon feed is contacted with the catalyst at a temperature in the range of from 175 to 400°C, preferably from 250 to 375°C.

11. A process according to any preceding claim, characterised in that the hydrocarbon feed is contacted with the catalyst at a pressure in the range of from 1 to 25 MPa (10 to 250 bars), preferably from 2.5 to 15 MPa (25 to 150 bars).

12. A process according to any preceding claim, characterised in that the hydrogen partial pressure is in the range of from 1 to 25 MPa (10 to 250 bars), preferably from 2.5 to 15 MPa (25 to 150 bars).

13. A process according to any preceding claim, characterised in that the hydrocarbon feed is provided at a space velocity in the range of from 0.1 to 5 kg/l/hr, preferably from 0.25 to 2 kg/l/hr.

14. A process according to any preceding claim, characterised in that the hydrocarbon feed is the product of a Fischer-Tropsch synthesis in which a catalyst comprising a metal selected from the elements of Group VIII of the Periodic Table is employed, preferably a metal selected from the iron group of elements, most preferably cobalt.

15. A process according to any preceding claim, characterised in that the hydrocarbon feed is the product of a Fischer-Tropsch synthesis in which is employed a catalyst comprising, as promoter, an element from Group IVB of the Periodic Table, preferably zirconium or titanium, especially zirconium.

## Patentansprüche

1. Verfahren zur Herstellung von Kohlenwasserstoffbrennstoffen aus einen Kohlenwasserstoffeinsatzmaterial, das durch eine Fischer-Tropsch-Synthese erhalten worden ist und eine Fraktion mit einem Siedepunkt oberhalb des Siedepunktbereiches der Kohlenwasserstoffbrennstoffe umfaßt, welches Verfahren ein Inberührungbringen dieses Kohlenwasserstoffeinsatzmaterials bei erhöhter Temperatur und erhöhtem Druck in Gegenwart von Wasserstoff mit einem Katalysator umfaßt, der einen Siliziumoxid-Aluminiumoxid-Träger enthält, der mit Platin nach einem Verfahren imprägniert wurden ist, das ein Inkontaktbringen des Trägers mit einem Platinsalz in Gegenwart einer Flüssigkeit mit einem pH-Wert unter 1,0 umfaßt.

2. Verfahren nach Anspruch 1, dadurch gekennzeichnet, daß der Träger mit dem Platinsalz in Gegenwart einer unter Monocarbonsäuren, Dicarbonsäuren, Chlorwasserstoffsäure, Schwefelsäure und Salpetersäure, ausgewählten Säure, vorzugsweise Salpetersäure in Kontakt gebracht worden ist.

3. Verfahren nach Anspruch 1 oder 2, dadurch gekennzeichnet, daß das Platinsalz ein Platinsäuresalz ist, vorzugsweise ein unter Hexachlorplatinsäure, Tetracyanoplatinsäure, Hexahydroxyplatinsäure, Platinmonohydroxychlorsäure und Platin(III) schwefelsäure ausgewähltes Platinsäuresalz, am meisten bevorzugt Hexachlorplatinsäure ist.

4. Verfahren nach einem der vorstehend Ansprüche, dadurch gekennzeichnet, daß das amorphe Siliziumoxid-Aluminiumoxid das Aluminiumoxid in einer Menge im Bereich von 5 bis 30 Gew.-%, vorzugsweise 10 bis 20 Gew.-%, stärker bevorzugt 12 bis 15 Gew.-% umfaßt.

5. Verfahren nach einem der vorstehenden Ansprüche, dadurch gekennzeichnet, daß das Porenvolumen des amorphen Siliziumoxid-Aluminiumoxids im Bereich von 1,0 bis 2,0 ml/g, vorzugsweise 1,0 bis 1,5 ml/g liegt.

6. Verfahren nach einem der Ansprüche 1 bis 4, dadurch gekennzeichnet, daß das Porenvolumen des amorphen Siliziumoxid-Aluminiumoxids unter 1,0 ml/g liegt, vorzugsweise im Bereich von 0,5 bis 0,9 ml/g, stärker bevorzugt 0,5 bis 0,9 ml/g.

7. Verfahren nach einem der vorstehenden Ansprüche, dadurch gekennzeichnet, daß der Träger ein Bindemittel, vorzugsweise ein unter Siliziumoxid, Aluminiumoxid, Tonen, Titanoxid, Zirkonoxid und Gemischen hievon ausgewähltes Bindemittel, am meisten bevorzugt Aluminiumoxid umfaßt.

8. Verfahren nach Anspruch 7, dadurch gekennzeichnet, daß der Katalysator das Bindemittel in einer Menge im Bereich von 10 bis 50 Gew.-%, vorzugsweise 15 bis 30 Gew.-%, bezogen auf das Gesamtgewicht des Trägers, umfaßt.

9. Verfahren nach einem der vorstehenden Ansprüche, dadurch gekennzeichnet, daß der Katalysator Platin in einer Menge im Bereich von 0,05 bis 5 Gew.-%, vorzugsweise 0,1 bis 2,0 Gew.-%, stärker bevorzugt 0,2 bis 1,0 Gew.-%, bezogen auf das Gesamtgewicht des Trägers, umfaßt.

10. Verfahren nach einem der vorstehenden Ansprüche, dadurch gekennzeichnet, daß das Kohlenwasserstoffeinsatzmaterial bei einer Temperatur im Bereich von 175 bis 400°C, vorzugsweise von 250 bis 375°C mit dem Katalysator in Kontakt gebracht wird.

11. Verfahren nach einem der vorstehenden Ansprüche, dadurch gekennzeichnet, daß das Kohlenwasserstoffeinsatzmaterial bei einem Druck in Bereich von 1 bis 25 MPa (10 bis 250 bar), vorzugsweise von 2,5 bis 15 MPa (25 bis 150 bar) mit dem Katalysator in Kontakt gebracht wird.

12. Verfahren nach einem der vorstehenden Ansprüche, dadurch gekennzeichnet, das der Wasserstoffpartialdruck im Bereich von 1 bis 25 MPa (10 bis 250 bar), vorzugsweise von 2,5 bis 15 MPa (25 bis 150 bar) liegt.

13. Verfahren nach einem der vorstehenden Ansprüche, dadurch gekennzeichnet, daß das Kohlenwasserstoffeinsatzmaterial mit einer Raumgeschwindigkeit von 0,1 bis 5 kg/l/h, vorzugsweise von 0,25 bis 2 kg/l/h zugeführt wird.

14. Verfahren nach einem der vorstehenden Ansprüche, dadurch gekennzeichnet, daß das Kohlenwasserstoffeinsatzmaterial das Produkt einer Fischer-Tropsch-Synthese ist, worin ein Katalysator verwendet wird, der ein aus den Elementen der Gruppe VIII des Periodensystems ausgewähltes Metall enthält, vorzugsweise ein aus der Eisengruppe der Elemente ausgewähltes Metall, am meisten bevorzugt Kobalt.

15. Verfahren nach einem der vorstehenden Ansprüche, dadurch gekennzeichent, daß das Kohlenwasserstoffeinsatzmaterial das Produkt einer Fischer-Tropsch-Synthese ist, worin ein Katalysator zum Einsatz gelangt, der als Promotor ein Element aus der Gruppe IV des Periodensystems, vorzugsweise Zirkon oder Titan, insbesondere Zirkon enthält.

## Revendications

1. Procédé de préparation de combustibles hydrocarbonés à partir d'une alimentation hydrocarbonée obtenue par une synthèse de Fischer-Tropsch et comprenant une fraction ayant un point d'ébullition au-dessus de l'intervalle de points d'ébullition des combustibles hydrocarbonés, lequel procédé comprend la mise en contact de ladite alimentation hydrocarbonée à température et pression élevées en présence d'hydrogène avec un catalyseur comprenant un support de silice-alumine imprégné de platine par un procédé comprenant la mise en contact du support avec un sel de platine en présence d'un liquide ayant un pH en dessous de 1,0.

2. Procédé suivant la revendication 1, caractérisé en ce que le support a été mis en contact avec le sel de platine en présence d'un acide choisi parmi les acides monocarboxyliques, les acides dicarboxyliques, l'acide chlorhydrique, l'acide sulfurique et l'acide nitrique, avantageusement l'acide nitrique.

3. Procédé suivant l'une ou l'autre des revendications 1 et 2, caractérisé en ce que le sel de platine est un sel de platine acide, avantageusement un sel de platine acide choisi parmi l'acide hexachloroplatinique, l'acide tétracyanoplatinique, l'acide hexahydroxyplatinique, l'acide monohydroxychlorique de platine et l'acide sulfurique de platine (III), plus avantageusement l'acide hexachloroplatinique.

4. Procédé suivant l'une quelconque des revendications précédentes, caractérisé en ce que la silice-alumine amorphe comprend de l'alumine en une quantité allant de 5 à 30 % en poids, avantageusement de 10 à 20 % en poids, plus avantageusement de 12 à 15 % en poids.

5. Procédé suivant l'une quelconque des revendications précédentes, caractérisé en ce que le volume des pores de la silice-alumine amorphe se situe dans la gamme de 1,0 à 2,0 ml/g, avantageusement de 1,0 à 1,5 ml/g.

6. Procédé suivant l'une quelconque des revendications 1 à 4, caractérisé en ce que le volume des pores de la silice-alumine amorphe est en dessous de 1,0 ml/g, avantageusement dans la gamme de 0,5 à 0,9 ml/g, plus avantageusement de 0,5 à 0,9 ml/g.

7. Procédé suivant l'une quelconque des revendications précédentes, caractérisé en ce que le support comprend un liant, avantageusement choisi parmi la silice, l'alumine, les argiles, l'oxyde de titane, la zircone et leurs mélanges, plus avantageusement l'alumine.

8. Procédé suivant la revendication 7, caractérisé en ce que le catalyseur comprend le liant en une quantité allant de 10 à 50 % en poids, avantageusement de 15 à 30 % en poids, par rapport au poids total du support.

9. Procédé suivant l'une quelconque des revendications précédentes, caractérisé en ce que le catalyseur comprend du platine en une quantité allant de 0,05 à 5,0 % en poids, avantageusement de 0,1 à 2,0 % en poids, plus avantageusement de 0,2 à 1,0 % en poids, par rapport au poids total du support.

10. Procédé suivant l'une quelconque des revendications précédentes, caractérisé en ce que l'alimentation hydrocarbonée est mise en contact avec le catalyseur à une température dans l'intervalle de 175 à 400°C, avantageusement de 250 à 375°C.

11. Procédé suivant l'une quelconque des revendications précédentes, caractérisé en ce que l'alimentation hydrocarbonée est mise en contact avec le catalyseur à une pression dans la gamme de 1,0 à 25 MPa (10 à 250 bars), avantageusement de 2,5 à 15 MPa (25 à 150 bars).

12. Procédé suivant l'une quelconque des revendications précédentes, caractérisé en ce que la pression partielle d'hydrogène se situe dans la gamme de 1 à 25 MPa (10 à 250 bars), avantageusement de 2,5 à 15 MPa (25 à 150 bars).

13. Procédé suivant l'une quelconque des revendications précédentes, caractérisé en ce que l'alimentation hydrocarbonée est amenée à une vitesse spatiale dans la gamme de 0,1 à 5 kg/l/heure, avantageusement de 0,25 à 2 kg/l/heure.

14. Procédé suivant l'une quelconque des revendications précédentes, caractérisé en ce que l'alimentation hydrocarbonée est le produit d'une synthèse de Fischer-Tropsch dans laquelle est utilisé un catalyseur comprenant un métal choisi parmi les éléments du Groupe VIII du Tableau Périodique, le métal étant avantageusement choisi dans le groupe du fer des éléments, plus avantageusement le cobalt.

15. Procédé suivant l'une quelconque des revendications précédentes, caractérisé en ce que l'alimentation hydrocarbonée est le produit d'une synthèse de Fischer-Tropsch dans laquelle est utilisé un catalyseur comprenant, comme promoteur, un élément du Groupe IVB du Tableau Périodique, avantageusement du zirconium ou du titane, en particulier le zirconium.
